# EUROPEAN PATENT APPLICATION

(11) **EP 4 793 896 A1**
(43) Date of publication of application: **19.08.2026**
(21) Application number: 25774843.4
(22) Date of filing: 07.02.2025
(51) Int. Cl.: G06T 19/00, G06T 11/60, G06T 5/20, G06F 3/048

(54) **IMAGE GENERATION APPARATUS AND METHOD**

(30) Priority: 21.03.2024 KR 20240039101
(71) Applicant: Samsung Electronics Co., Ltd., Suwon-si, Gyeonggi-do 16677 (KR)
(72) Inventor: OH, Seungbin, Suwon-si Gyeonggi-do 16677 (KR); LEE, Sangyoon, Suwon-si Gyeonggi-do 16677 (KR); LEE, Youngah, Suwon-si Gyeonggi-do 16677 (KR); HWANG, Sungjun, Suwon-si Gyeonggi-do 16677 (KR)
(74) Representative: Appleyard Lees IP LLP
(86) International application number: PCT/KR2025/001840
(87) International publication number: WO 2025/198180

(57) **Abstract**

An image generation apparatus includes a display, an input device, memory storing instructions, and at least one processor, where the instructions, when executed by the at least one processor, cause the image generation apparatus to receive, through the input device, a user input selecting at least one two-dimensional (2D) image and at least one three-dimensional (3D) space type, provide a 3D image based on the selected at least one 2D image and the selected at least one 3D space type, and control the display to display the provided 3D image.

## Description

### [Technical Field]

The disclosure relates to an image generation apparatus and method for generating a three-dimensional (3D) image.

### [Background Art]

When a user changes a background screen of a desktop, laptop, or mobile device, various images may be used, such as images provided by a manufacturer, images provided by a content provider, or images acquired by the user.

A light field display (LFD) is a three-dimensional (3D) display that creates a stereoscopic image by generating a light field expressed as a vector distribution (intensity, direction) of light in a space by a flat display and optical elements. To set a background screen of such an LFD monitor, a 3D image for 3D environment requires to be used.

Such 3D images are not easy for users to create themselves, and 3D images provided by manufacturers, etc. are limited. Accordingly, there is an increasing need for users to convert desired images into 3D images and set the images as a background screen of the LFD monitor.

### [Disclosure]

The disclosure provides an image generation apparatus and method capable of generating a three-dimensional (3D) image based on a two-dimensional (2D) image to enable a user to easily obtain the 3D image desired by the user.

Technical objects that can be achieved by the disclosure are not limited to the above-mentioned objects, and other technical objects not mentioned will be clearly understood by one of ordinary skill in the art to which the disclosure belongs from the following description.

According to an aspect of the disclosure, an image generation apparatus may include: a memory configured to store at least one two-dimensional (2D) image and at least one three-dimensional (3D) space type; an input device configured to receive a user input for selecting one of the at least one 2D image and one of the at least one 3D space type stored in the memory; a processor configured to generate a 3D image based on the selected 2D image and the selected 3D space type; and a display configured to output the generated 3D image.

According to an aspect of the disclosure, an image generation method may include: receiving a user input for selecting a two-dimensional (2D) image; receiving a user input for selecting a three-dimensional (3D) space type; generating a 3D image based on the 2D image corresponding to the received user input and the 3D space type corresponding to the received user input; identifying distinct layers having different depth levels among a plurality of objects included in the generated 3D image; and outputting the generated 3D image.

### [Description of Drawings]

FIG. 1 is a control block diagram of an image generation apparatus according to an embodiment of the disclosure.
FIG. 2 is a flowchart illustrating a three-dimensional (3D) image generation method according to an embodiment of the disclosure.
FIG. 3 is a diagram illustrating an example of a two-dimensional (2D) image and 3D space type according to an embodiment of the disclosure.
FIG. 4 to FIG. 6 are diagrams illustrating processes for generating a 3D image based on a 3D space type according to an embodiment of the disclosure.
FIG. 7 is a flowchart illustrating processes of generating a 3D image by segmenting layers of objects according to an embodiment of the disclosure.
FIG. 8 is a diagram illustrating processes of generating a 3D image by segmenting layers of objects according to an embodiment of the disclosure.
FIG. 9 is a diagram illustrating how a 3D image generated by segmenting layers of objects according to an embodiment of the disclosure is displayed to a user.
FIG. 10 is a flowchart illustrating processes of blurring an object positioned on a layer of a high depth level according to an embodiment of the disclosure.
FIG. 11 is a diagram illustrating a difference in a degree of blur effect based on layers of objects according to an embodiment of the disclosure.
FIG. 12 is a diagram illustrating a user interface (UI) object placed together in a 3D image according to an embodiment of the disclosure.
FIG. 13 is a flowchart illustrating a collision interaction based on movement of an UI object according to an embodiment of the disclosure.
FIG. 14 is a diagram illustrating a collision interaction based on movement of an UI object according to an embodiment of the disclosure.

### [Modes of the Disclosure]

Various embodiments of the disclosure and terms used herein are not intended to limit the technical features described herein to specific embodiments, and should be understood to include various modifications, equivalents, or substitutions of the corresponding embodiments.

In describing of the drawings, similar reference numerals may be used for similar or related elements.

The singular form of a noun corresponding to an item may include one or more of the items unless clearly indicated otherwise in a related context.

In the disclosure, phrases, such as "A or B", "at least one of A and B", "at least one of A or B", "A, B or C", "at least one of A, B and C", and "at least one of A, B, or C" may include any one or all possible combinations of the items listed together in the corresponding phrase among the phrases.

The term "and/or" includes any and all combinations of one or more of the associated listed items.

Terms such as "1st", "2nd", "primary", or "secondary" may be used simply to segment an element from other elements, without limiting the element in other aspects (e.g., importance or order).

When an element (e.g., a first element) is referred to as being "(functionally or communicatively) coupled" or "connected" to another element (e.g., a second element), the first element may be connected to the second element, directly (e.g., wired), wirelessly, or through a third element.

It will be understood that when the terms "includes", "comprises", "including", and/or "comprising" are used in the disclosure, they specify the presence of the specified features, figures, steps, operations, components, members, or combinations thereof, but do not preclude the presence or addition of one or more other features, figures, steps, operations, components, members, or combinations thereof.

When a given element is referred to as being "connected to", "coupled to", "supported by" or "in contact with" another element, it is to be understood that it may be directly or indirectly connected to, coupled to, supported by, or in contact with the other element. When a given element is indirectly connected to, coupled to, supported by, or in contact with another element, it is to be understood that it may be connected to, coupled to, supported by, or in contact with the other element through a third element.

It will also be understood that when an element is referred to as being "on" another element, it may be directly on the other element or intervening elements may also be present.

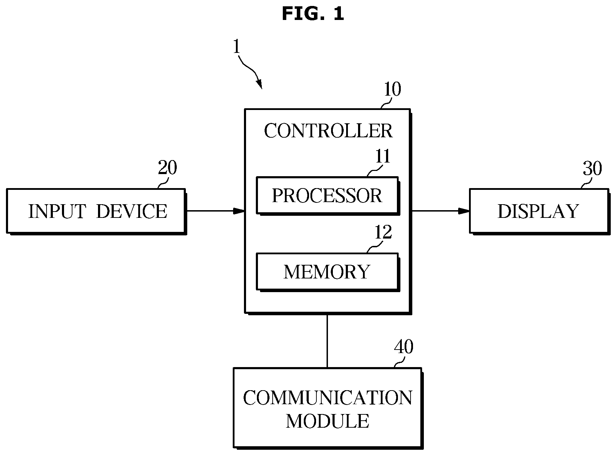

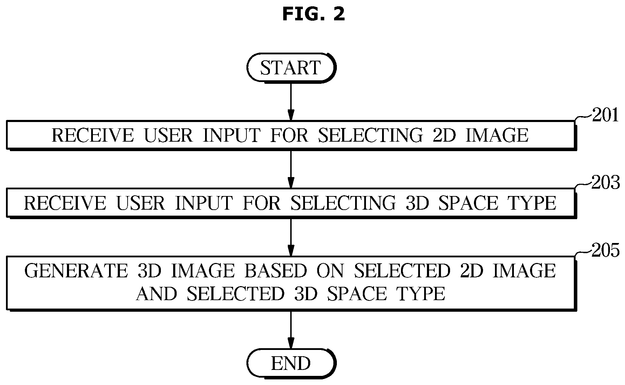

FIG. 1 is a control block diagram of an image generation apparatus according to an embodiment of the disclosure. FIG. 2 is a flowchart illustrating a three-dimensional (3D) image generation method according to an embodiment of the disclosure.

The image generation apparatus 1 may include an input device 20, a controller 10, and a display 30, and the controller 10 may include a processor 11 and a memory 12.

The controller 10 may include a memory 12 that stores a control program and control data for generating a 3D image and controlling the display to output the 3D image, and at least one processor 11 that generates a control signal according to the control program and control data stored in the memory 12. The memory 12 and the processor 11 may be provided integrally or separately.

The memory 12 may store at least one 2D image and at least one 3D space type, and may store a program and data for generating a 3D image and controlling the display to output the 3D image.

The memory 12 may include a volatile memory for temporarily storing data, such as a static random access memory (S-RAM) and a dynamic random access memory (DRAM). In addition, the memory 12 may include a non-volatile memory such as a read only memory (ROM), erasable programmable read only memory (EPROM), and electrically erasable programmable read only memory (EEPROM) for long-term data storage.

The processor 11 may include logic circuits and operation circuits, may process data according to the program stored in the memory, and may generate a control signal based on the processing result.

The processor 11 may generate a 3D image based on a selected two-dimensional (2D) image and a selected 3D space type in operation 205.

The processor 11 may input the single 2D image to an artificial intelligence (AI) model to generate the 3D image. Here, the AI model may include a generative AI.

In an embodiment, the AI model may be stored in the memory 12 and/or an external device (e.g., a server).

In a case where the AI model is stored in the memory 12, the processor 11 may generate the 3D image by inputting the selected 2D image and the selected 3D space type to the AI model stored in the memory 12.

In a case where the AI model is stored only in the external device, the processor 11 may transmit information about the selected 2D image and the selected 3D space type to the external device through a communication module 40. The external device may generate a 3D image by inputting the selected 2D image and the selected 3D space type to the AI model, and may transmit the generated 3D image to the image generation apparatus 1. As a result, the processor 11 may generate the 3D image.

That is, the operation of generating the 3D image by inputting the selected 2D image and the selected 3D space type to the AI model by the processor 11 may include the operation of the processor 11 generating the 3D image by inputting the selected 2D image and the selected 3D space type to the AI model stored in the memory 12, and/or the operation of the processor 11 generating the 3D image by transmitting the information about the selected 2D image and the selected 3D space type to the external device that stores the AI model through the communication module 40 and receiving the generated 3D image from the external device.

The communication module 40 may include at least one of a short-range wireless communication module or a long-range wireless communication module.

The communication module 40 may transmit data to an external device (e.g., a server, a user device, etc.) or receive data from the external device. For example, the communication module 40 may establish communication with a server and/or a user device, and transmit and receive data.

For the communication, the communication module 40 may establish a direct (e.g., wired) communication channel or a wireless communication channel between external devices, and support the performance of the communication through the established communication channel. According to an embodiment, the communication module 40 may include a wireless communication module (e.g., a cellular communication module, a short-range wireless communication module, or a global navigation satellite system (GNSS) communication module) or a wired communication module (e.g., a local area network (LAN) communication module, or a power line communication module). Among these communication modules, the corresponding communication module may communicate with an external device through a first network (e.g., a short-range wireless communication network such as Bluetooth, wireless fidelity (Wi-Fi) direct, or infrared data association (IrDA)) or a second network (e.g., a long-range wireless communication network such as a legacy cellular network, a 5G network, a next-generation communication network, the Internet, or a computer network (e.g., LAN or WAN). These various types of communication modules may be integrated as one component (e.g., a single chip) or implemented as a plurality of separate components (e.g., multiple chips).

The short-range wireless communication module may include a Bluetooth communication module, a Bluetooth Low Energy (BLE) communication module, a near field communication module, a WLAN (Wi-Fi) communication module, and a Zigbee communication module, an infrared data association (IrDA) communication module, a Wi-Fi Direct (WFD) communication module, an ultrawideband (UWB) communication module, an Ant+ communication module, a microwave (uWave) communication module, etc., but is not limited thereto.

For such communication modules 40, there may be a first communication module for communicating with a server and a second communication module for communicating with a user device or the like, or a single communication module 40 may perform communication with both the server and the user device, or the like.

The input device 20 may receive an input from, for example, a user or the like (hereinafter referred to as 'a user') for selecting a 2D image and a 3D space type from among at least one 2D image and at least one 3D space type stored in the memory 12, in operations 201 and 203, respectively. A method of implementing the input device 20 is not limited thereto, and the input device 20 may be implemented in various forms for receiving input from a user.

For example, the input device 20 may include a tact switch, a push switch, a slide switch, a toggle switch, a micro switch, a touch switch, a touch pad, a touch screen, a jog dial, and/or a microphone.

In addition, a user input may be received from a separate device, such as a remote control, through a second communication module.

The input device 20 may also receive a voice input from a user.

In this case, the input device 20 may be implemented as a microphone, and the like, to directly receive a voice input from a user, but a voice input through a microphone of an external device, such as a remote control, may also be received by the communication module 40.

The display 30 may output the 3D image generated by the processor 11. The display 30 may include various types of displays capable of outputting a 3D image, such as a monitor of a desktop or a screen of a mobile device.

In another embodiment, the image generation apparatus 1 may not include the display 30, and may be connected to a separate external device to allow a display (not shown) provided in the external device to output the generated 3D image.

That is, the image generation apparatus 1 may be connected to a separate external device, such as a television (TV) or monitor by wire or wirelessly, to allow the 3D image generated by the image generation apparatus 1 to be output from the external device.

In this case, the image generation apparatus 1 may be provided with a separate output port for outputting a video/audio signal of the generated 3D image to the external device. That is, the image generation apparatus 1 may be provided with a video signal output port for outputting the video signal and an audio signal output port for outputting the audio signal separately or together in one port.

The image generation apparatus 1 may transmit the video/audio signal to the external device through a communication module 40 via wireless communication, and the like.

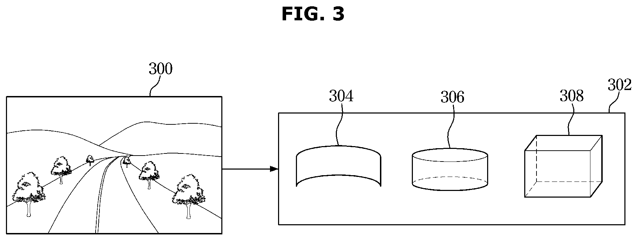

FIG. 3 is a diagram illustrating an example of 2D image and 3D space types according to an embodiment of the disclosure.

As described above, a user may select a 2D image and a 3D space type through the input device 20.

The user may select a 2D image stored in the memory, or may upload a 2D image taken by the user or acquired by any another method and select the uploaded 2D image.

In addition, the user may select one of at least 3D space type stored in the memory.

The 3D space types 302 may include, for example, a curved type 304, a cylinder type 306, and a cube type 308. These 3D space types 302 are only examples and may include different 3D space types.

The processor 11 may generate a 3D image based on the 2D image 300 and 3D space type 302 selected by the user.

The process of generating a 3D image for each of the types described above as an example is described below.

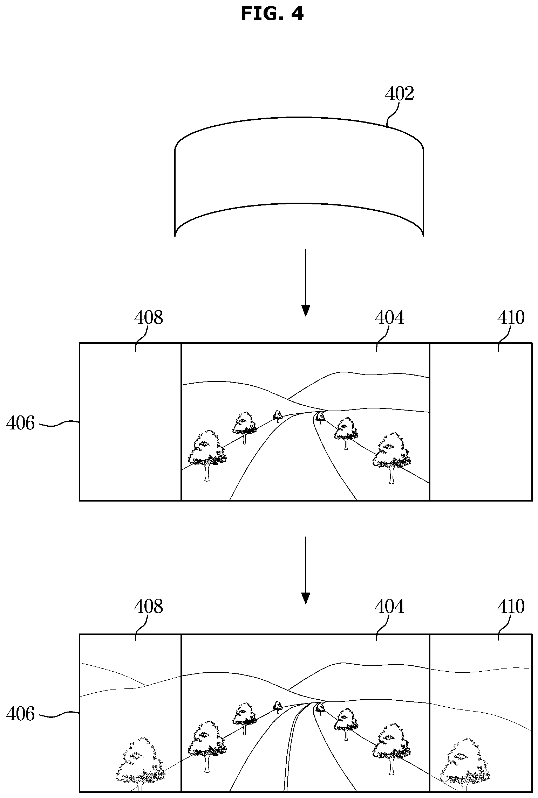

FIG. 4 to FIG. 6 are diagrams illustrating processes for generating a 3D image based on a 3D space type according to an embodiment of the disclosure.

Referring to FIG. 4, the processor 11 may generate a 3D image of a curved type based on the curved type 402 selected from the 3D space types.

In a case where the curved type 402 is selected, the processor 11 may position the selected 2D image 404 on a 2D development shape 406 corresponding to the selected 3D space type 402.

Thereafter, the processor 11 may generate an image for a remaining area 408 and 410 not occupied by the 2D image 404 in the 2D development shape 406 using an AI model (e.g., a generative AI model), to allow the generated image to be integrated with the 2D image.

That is, in a case where the existing 2D image 404 is placed on the development shape 406 corresponding to the curved type 402, the left and right areas 408 and 410 of the 2D image may not be filled by the existing 2D image 404 and may be empty.

In this instance, an image for the empty areas 408 and 410 not filled by the existing 2D image 404 may be generated to enable the generated image to be seamlessly integrated with the existing 2D image 404.

In this regard, the AI model may recognize images (visual understanding). The visual understanding of the AI model is a technology that recognizes and processes objects in a manner similar to human vision, and may include object recognition, object tracking, image search, face recognition, scene understanding, spatial understanding, and image enhancement.

In the case of a 2D image 404 including trees and mountains, etc., as shown in FIG. 4, the processor 11 may generate an image that fills the empty areas 408 and 410 with trees and mountains to smoothly blend with the existing 2D image 404.

As described above, the processor 11 may input the 2D image 404 to the generative AI model to generate the images for the remaining areas 408 and 410, or the processor 11 may directly generate the images for the remaining areas 408 and 410 as the generative AI model.

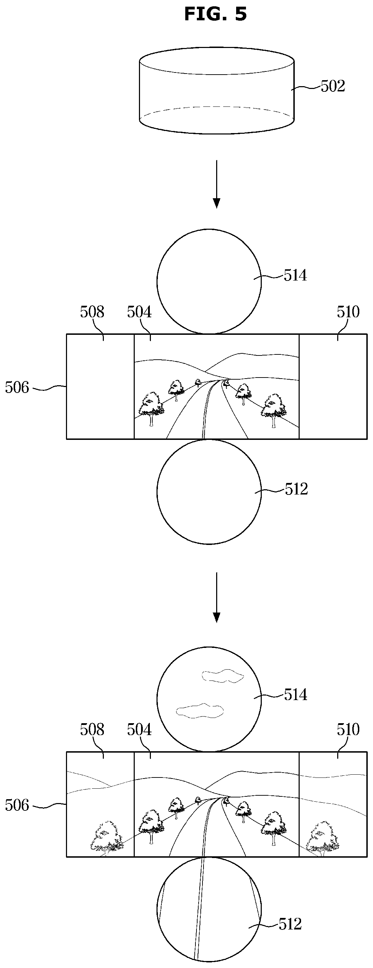

Referring to FIG. 5, the processor 11 may generate a 3D image of a cylinder type based on the cylinder type 502 selected from the 3D space types.

In a case where the cylinder type 502 is selected, the processor 11 may position the selected 2D image 504 on a 2D development shape 506 corresponding to the selected 3D space type 502.

Thereafter, the processor 11 may generate an image for a remaining area 508 and 510 not occupied by the 2D image 504 in the 2D development shape 506 using the generative AI model to allow the generated image to be integrated with the 2D image 504.

That is, in a case where the existing 2D image 504 is placed on the development shape 506 corresponding to the cylinder type 502, the left/right areas 508 and 510, as well as upper/lower areas 512 and 514 of the 2D image may not be filled by the existing 2D image 504 and may be empty.

In this instance, an image for the empty areas 508, 510, 512 and 514 not filled by the existing 2D image 504 may be generated to enable the generated image to be seamlessly integrated with the existing 2D image 504.

In the case of a 2D image 504 including trees, mountains, roads, sky, and the like, as shown in FIG. 5, the processor 11 may generate an image that fills the empty areas 508, 510, 512 and 514 with trees, mountains, roads, sky, and the like so as to smoothly blend with the existing 2D image.

Specifically, the processor 11 may generate an image to allow the generated image to be seamlessly integrated with the trees and mountains in the left/right areas 508 and 510 of the 2D image, and generate an image to allow the generated image to be seamlessly integrated with the sky in the upper area 514 of the 2D image, and generate an image to allow the generated image to be seamlessly integrated with the road in the lower area 512 of the 2D image.

As described above, the processor 11 may input the 2D image 504 to the generative AI model to generate the images for the remaining areas 508, 510, 512 and 514, or the processor 11 may directly generate the images for the remaining areas 508, 510, 512 and 514 as the generative AI model.

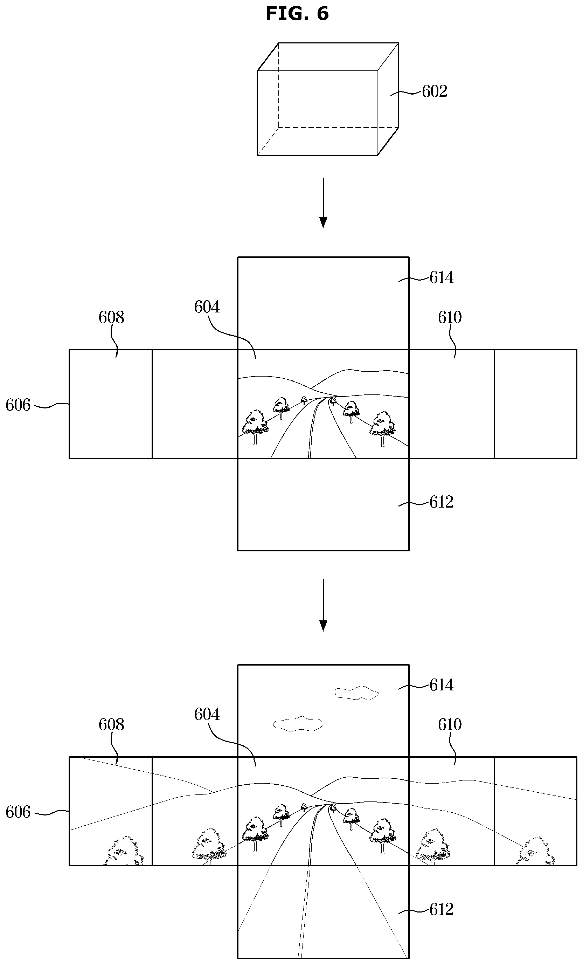

Referring to FIG. 6, the processor 11 may generate a 3D image of a cube type based on the cube type 602 selected from the 3D space types.

In a case where the cube type 602 is selected, the processor 11 may position the selected 2D image 604 on a 2D development shape 606 corresponding to the selected 3D space type 602.

Thereafter, the processor 11 may generate an image for a remaining area 608, 610, 612 and 614 not occupied by the 2D image 604 in the 2D development shape 606 using the generative AI model to allow the generated image to be integrated with the 2D image 604. That is, in a case where the existing 2D image 604 is placed on the development shape 606 corresponding to the cube type 602, the left/right areas 608 and 610, as well as the upper/lower areas 612 and 614 of the 2D image may not be filled by the existing 2D image 604 and may be empty.

In this instance, an image for the empty areas 608, 610, 612 and 614 not filled by the existing 2D image 604 may be generated to enable the generated image to be seamlessly integrated with the existing 2D image 604.

In the case of a 2D image 604 including trees, mountains, roads, sky, and the like, as shown in FIG. 6, the processor 11 may generate an image that fills the empty areas 608, 610, 612 and 614 with trees, mountains, roads, sky, and the like so as to smoothly blend with the existing 2D image 604.

Specifically, the processor 11 may generate an image to allow the generated image to be seamlessly integrated with the trees and mountains in the left/right areas 608 and 610 of the 2D image, and generate an image to allow the generated image to be seamlessly integrated with the sky in the upper area 614 of the 2D image, and generate an image to allow the generated image to be seamlessly integrated with the road in the lower area 612 of the 2D image.

As described above, the processor 11 may input the 2D image 604 to the generative AI model to generate the images for the remaining areas 608, 610, 612 and 614, or the processor 11 may directly generate the images for the remaining areas 608, 610, 612 and 614 as the generative AI model..

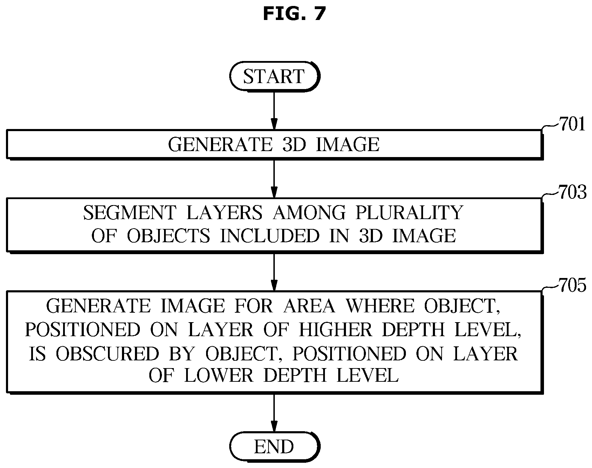

FIG. 7 is a flowchart illustrating processes of generating a 3D image by segmenting layers of objects according to an embodiment of the disclosure.

As described above, the processor 11 may generate a 3D image based on a selection of a 2D image and a 3D space type (701).

Thereafter, the processor 11 may segment layers among a plurality of objects included in the generated 3D image (703).

That is, the layers among the plurality of objects may be segmented to provide a three-dimensional effect to a user.

For example, the plurality of objects may include a first object positioned on a first layer and a second object positioned on a second layer having a higher depth level than the first layer.

Here, each layer may have a different depth level in the 3D image.

That is, a layer located farther back in the 3D image, i.e., farther away from a user's viewpoint, may have a higher depth level, and a layer located farther forward in the 3D image, i.e., closer to the user's viewpoint, may have a lower depth level.

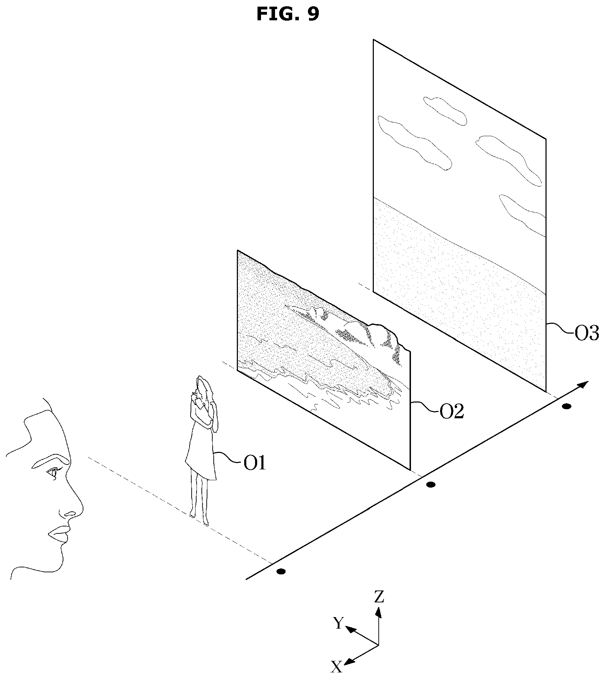

Here, 'back'is defined as the direction away from the user, based on the direction in which the user looks at the monitor, and the like. That is, as shown in FIG. 9, based on the X-axis, 'back' is defined as farther away from the user, and 'forward' is defined as closer to the user.

Accordingly, in the disclosure, a layer of a higher depth level may be located farther back in a 3D image, and a layer of a lower depth level may be located farther forward in the 3D image.

The processor may control the display to sequentially display the plurality of objects according to a depth level of a respective layer where each of the plurality of objects is positioned.

The processor 11 may generate an image for an area where the second object is obscured by the first object overlapping the second object to allow the generated image to be seamlessly integrated with an image of an unobscured area of the second object.

That is, processor 11 may generate an image for an area where an object, positioned on a layer of a higher depth level, is obscured by an object, positioned on a layer of a lower depth level, so as to allow the generated image to be seamlessly integrated with an image of an unobscured area of the object positioned on the layer of higher depth level (705).

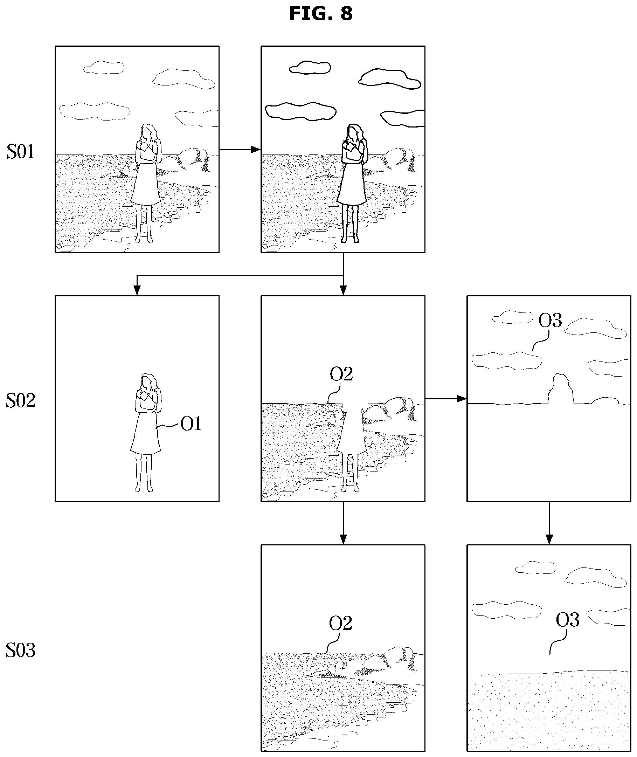

The detailed description thereof is described with reference to FIG. 8.

FIG. 8 is a diagram illustrating processes of generating a 3D image by segmenting layers of objects according to an embodiment of the disclosure. FIG. 9 is a diagram illustrating how a 3D image generated by segmenting layers of objects according to an embodiment of the disclosure is displayed to a user.

In operation S01, the processor 11 may segment layers of a plurality of objects included in a generated 3D image. That is, the processor 11 may segment an object positioned on a layer of a relatively low depth level and an object positioned on a layer of a relatively high depth level.

Thereafter, in operation S02, the processor 11 may separate the segmented objects. That is, the processor 11 may separate the objects into a human-shaped object O1 positioned on the layer of the lowest depth level, a beach-shaped object O2 positioned on the layer of a higher depth level than that of the human-shaped object O1, and a sky-shaped object O3 positioned on the layer of the highest depth level.

Thereafter, in operation S03, the processor 11 may generate an image for an area where the object on the higher depth-level layer is obscured by the object on the lower depth-level layer to allow the generated image to be seamlessly integrated with an image of an unobscured area with respect to each of the separated objects.

Specifically, in the case of the beach-shaped object O2, the processor 11 may generate an image for an obscured area of the beach-shaped object O2, i.e., the area covered by the human-shaped object O1 positioned on a lower depth-level layer, so as to allow the generated image to fill in the obscured area of the beach-shaped object O2. Accordingly, the empty area caused by the human-shaped object O2 in the beach-shaped object O2 may be filled, thereby enabling the entire beach-shaped object O2 to be displayed.

Also, in the case of the sky-shaped object O3, the processor 11 may generate an image for an obscured area of the sky-shaped object O3, i.e., the area covered by the human-shaped object O1 and the beach-shaped object O2 positioned on the lower depth-level layers, so as to allow the generated image to fill in the obscured area of the sky-shaped object O3. Accordingly, the empty area caused by the human-shaped object O2 and the beach-shaped objects O3 in the sky-shaped objects O3 may be filled, thereby enabling the entire sky-shaped object O3 to be displayed.

By arranging the generated images according to the layers, a 3D image that may provide a user with a stereoscopic effect may be generated, as shown in FIG. 9.

That is, when the user looks at a monitor, etc., the 3D image may be generated to make the user feel as if the human-shaped object O1 is in the front, the beach is behind the object O1, and the sky is behind the beach.

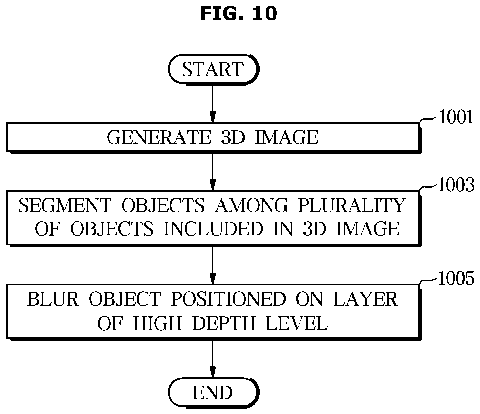

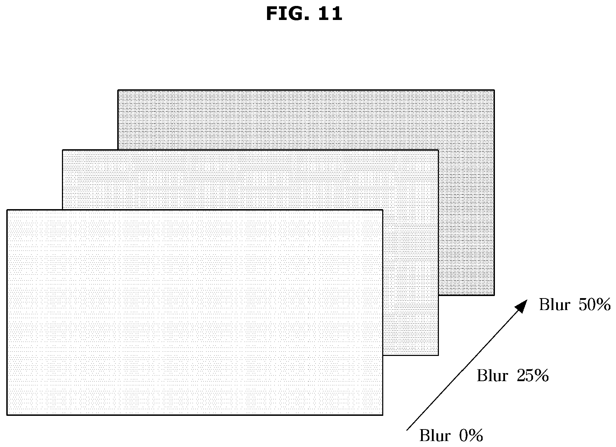

FIG. 10 is a flowchart illustrating processes of blurring an object positioned on a layer of a high depth level according to an embodiment of the disclosure. FIG. 11 is a diagram illustrating a difference in a degree of blur effect based on layers of objects according to an embodiment of the disclosure.

In operation 1001, the device may generate a 3D image. In operation 1003, the device may segment objects among a plurality of objects included in the 3D image. That is, as described in FIG. 8, objects may be segmented from other objects based on their depth levels (e.g., based on their corresponding depth layer). In operation 1005, the device may blur an object positioned on a layer having a high depth level (i.e., further back from the user's perspective) relative to other objects in the 3D image

In order to improve a visibility of a 3D image, the processor 11 may blur an object positioned on a layer having a relatively high depth level.

That is, in the case of a 3D image including a first object positioned on a first layer and a second object positioned on a second layer having a higher depth level than the first layer as described above, the second object positioned relatively farther back from the user's viewpoint may be blurred to make the first object positioned in the front more visible, thereby providing an effect of improved visibility and three-dimensionality.

The processor 11 may control the display 30 to output the blurred second object, i.e., the second object to which the blur effect is applied.

In a case where a third object positioned on a third layer having a higher depth level than the second layer is further included, the processor 11 may blur the third object at a higher blur level than the second object.

That is, as shown in FIG. 11, visibility and three-dimensionality may be further improved by applying a higher level of blur effect to an object positioned on a layer having a higher depth level.

Referring to FIG. 9 as an example, without blurring the human-shaped object O1 positioned on the layer having the lowest depth level, the beach-shaped object O2 may be blurred at a blur level of approximately 25%, and the sky-shaped object O3 positioned on the layer having the highest depth level may be blurred at a higher blur level of approximately 50%. The above blur levels, i.e., blur effect levels, are only examples, and may be set to different levels to improve visibility and three-dimensionality.

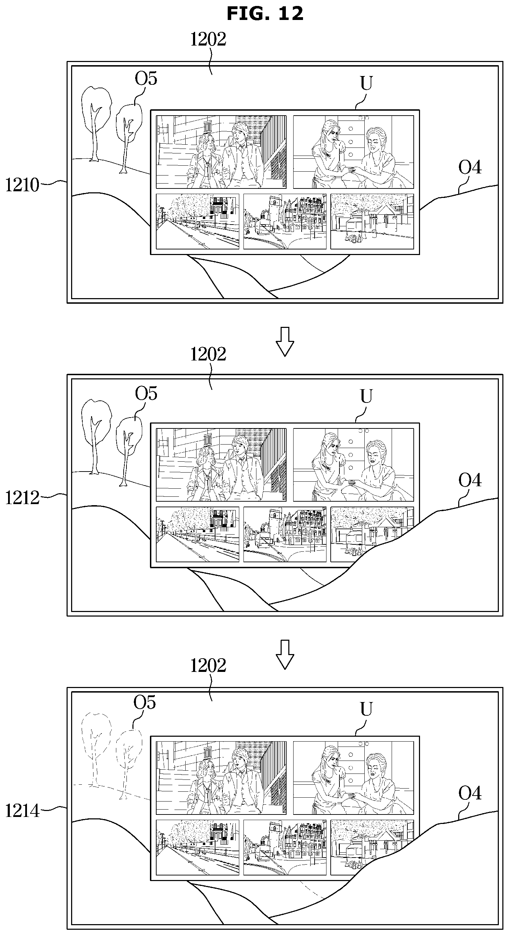

FIG. 12 is a diagram illustrating a user interface (UI) object placed together in a 3D image according to an embodiment of the disclosure.

A UI object may be placed within a background screen of a computer, and the like. In this case, a relationship between a plurality of objects and the UI object within a 3D image is described below.

In a 3D image including a first object positioned on a first layer and a second object positioned on a second layer having a higher depth level than the first layer as described above, a UI object positioned on a fourth layer having a higher depth level than the first layer and a lower depth level than the second layer may be further included.

In this case, the processor 11 may blur the second object positioned on a layer having a higher depth level than the UI object U, and may control the display 30 to output the blurred second object, i.e., the second object to which the blur effect is applied.

That is, by blurring the object positioned relatively farther back than the UI object U, visibility of the UI object U may be improved.

As shown in FIG. 12, in a case where the UI object U is further included in the generated 3D image, the processor 11 may position the UI object U on an appropriate layer to allow the UI object U to be located in front of an object O5 and behind an object O4.

An AI model or the like may be used to place the UI object U in an appropriate position to improve a user's visibility.

As shown in FIG. 12, in a case where the UI object U is positioned at the middle position between the mountain-shaped object O4 and the mountain-shaped object O5 including trees, the processor 11 may blur the object O5 including trees positioned on a layer having a higher depth level than the UI object U.

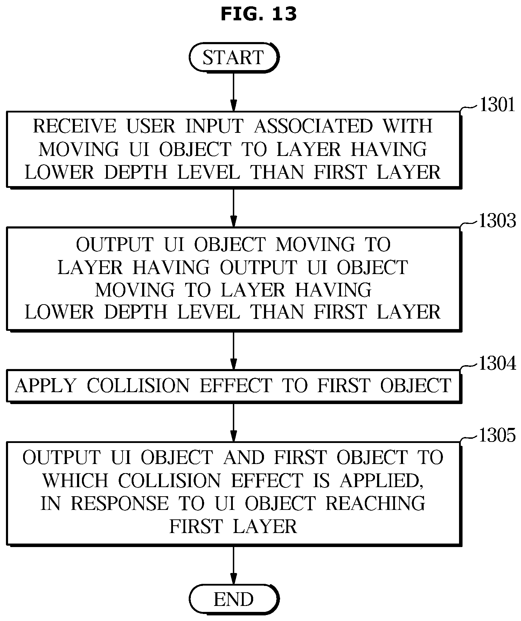

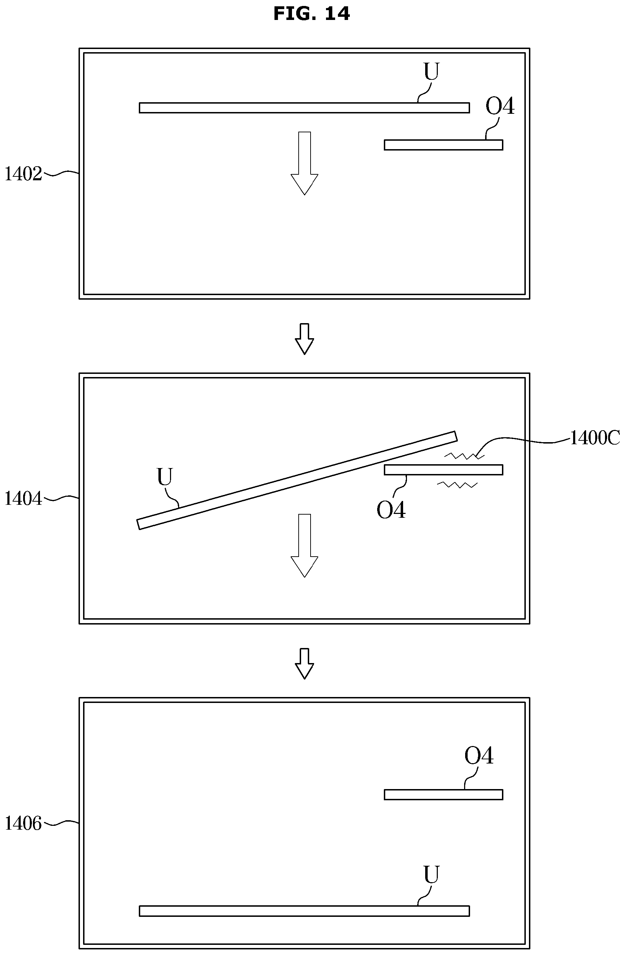

FIG. 13 is a flowchart illustrating a collision interaction based on movement of an UI object according to an embodiment of the disclosure. FIG. 14 is a diagram illustrating a collision interaction based on movement of an UI object according to an embodiment of the disclosure.

In a 3D image including a first object positioned on a first layer and a second object positioned on a second layer having a higher depth level than the first layer as described above, in a case where a UI object U positioned on a fourth layer having a higher depth level than the first layer and a lower depth level than the second layer is further included, the processor 11 may control the display 30 to output the UI object moving to a layer having a lower depth level than the first layer (1303), based on receiving a user input associated with moving the UI object to the layer having the lower depth level than the first layer (1301). In operation 1304, the processor 11 may apply a collision effect to the first object based on the movement of the UI object to another layer

Thereafter, in response to the UI object reaching the first layer, the processor 11 may control the display 30 to output the first object and the UI object to which a collision effect is applied in operation 1305.

That is, as shown in FIG. 12, in a case where the mountain-shaped object O4 positioned on a lower depth-level layer than the UI object U and the object O5 positioned on a higher depth-level layer than the UI object U are included, in response to receiving a user input to move the UI object to a lower depth-level layer than the mountain-shaped object O4 (1301), the processor 11 may move the UI object to the lower depth-level layer than the mountain-shaped object O4 .

Thereafter, when the UI object U reaches the same layer as the layer where the mountain-shaped object O4 is positioned during the movement of the UI object, the processor 11 may apply a collision effect to the UI object U and the mountain-shaped object O4 and may control the display 30 to output the UI object U and the mountain-shaped object O4 to which the collision effect is applied (1305).

As shown in FIG. 14, a user input may be received to move the UI object U forward relative to the object O4 positioned on a lower depth-level layer than the UI object U. The user input may be a motion, such as a gesture of a user's hand, or an input using a separate device such as a mouse.

While moving the position of the UI object U to the lower depth-level layer according to such a gesture, in a case where the UI object U overlaps with the object O4 positioned on the lower depth-level layer than the UI object U, the processor 11 may apply the collision effect to the UI object U and the object O4.

For example, various types of collision effects may be applied, such as processing the object O4 positioned on the lower depth-level layer than the UI object U to vibrate, processing the object O4 and the UI object U to move forward and then move backward, or processing the UI object U to be partially tilted by the object O4 and then return to its original shape. By applying such collision effects, the user may feel a sense of liveliness.

According to an embodiment of the disclosure, an image generation apparatus includes a display, an input device, memory storing instructions, and at least one processor, where the instructions, when executed by the at least one processor, cause the image generation apparatus to receive, through the input device, a user input selecting at least one two-dimensional (2D) image and at least one three-dimensional (3D) space type, provide a 3D image based on the selected at least one 2D image and the selected at least one 3D space type, and control the display to display the provided 3D image.

According to the disclosure, a 3D image may be generated based on a 2D image to enable a user to easily obtain the 3D image desired by the user.

The distinct layers may have different depth levels.

The plurality of objects may include: a first object positioned on a first layer; and a second object positioned on a second layer having a higher depth level than the first layer, and the processor may be configured to generate an image for an area where the second object is obscured by the first object overlapping the second object to allow the generated image to be seamlessly integrated with an image of an unobscured area of the second object.

The processor may be configured to blur the second object, and control the display to output the blurred second object.

The plurality of objects may further include a third object positioned on a third layer having a higher depth level than the second layer, and the processor may be configured to control the display to output the third object to which a higher level of blur effect is applied than to the second object.

The processor may be configured to control the display to sequentially display the plurality of objects according to a depth level of a respective layer where each of the plurality of objects is positioned.

The plurality of objects may further include a user interface (UI) object positioned on a fourth layer having a higher depth level than the first layer and a lower depth level than the second layer, and the processor may be configured to blur the second object positioned on the second layer having a higher depth level than the fourth layer, and control the display to output the blurred second object.

The processor may be configured to, in response to receiving a user input associated with moving the UI object to a layer of a lower depth level than the first layer, control the display to output the UI object moving to the layer of the lower depth level than the first layer based on the user input.

The processor may be configured to control the display to output the first object and the UI object to which a collision effect is applied, in response to the UI object reaching the first layer.

The processor may be configured to generate the 3D image by positioning the selected 2D image onto a 2D development shape corresponding to the selected 3D space type and transforming the 2D image of the 2D development shape into a 3D shape corresponding to the selected 3D space type.

According to an embodiment of the disclosure, an image generation method may include: receiving a user input for selecting a 2D image; receiving a user input for selecting a 3D space type; generating a 3D image based on the 2D image corresponding to the received user input and the 3D space type corresponding to the received user input; identifying distinct layers having different depth levels among a plurality of objects included in the generated 3D image; and outputting the generated 3D image.

The plurality of objects may include: a first object positioned on a first layer; and a second object positioned on a second layer having a higher depth level than the first layer, and the generating of the 3D image may include generating an image for an area where the second object is obscured by the first object overlapping the second object to allow the generated image to be seamlessly integrated with an image of an unobscured area of the second object.

The outputting of the 3D image may include blurring the second object, and outputting the blurred second object.

The plurality of objects may include a third object positioned on a third layer having a higher depth level than the second layer, and the outputting of the 3D image may include outputting the third object to which a higher level of blur effect is applied than to the second object.

The outputting of the 3D image may include sequentially displaying the plurality of objects according to a depth level of a respective layer where each of the plurality of objects is positioned.

The plurality of objects may further include a UI object positioned on a fourth layer having a higher depth level than the first layer and a lower depth level than the second layer, and the outputting of the 3D image may include blurring the second object positioned on the second layer having a higher depth level than the fourth layer, and outputting the blurred second object.

The outputting of the 3D image may include, in response to receiving a user input associated with moving the UI object to a layer of a lower depth level than the first layer, outputting the UI object moving to the layer of the lower depth level than the first layer based on the user input.

The outputting of the 3D image may include outputting the first object and the UI object to which a collision effect is applied, in response to the UI object reaching the first layer.

The generating of the 3D image may include generating the 3D image by positioning the selected 2D image onto a 2D development shape corresponding to the selected 3D space type and transforming the 2D image of the 2D development shape into a 3D shape corresponding to the selected 3D space type.

According to the disclosure, the image generation apparatus and method may generate a 3D image based on a 2D image to enable a user to easily obtain the 3D image desired by the user.

Meanwhile, the disclosed embodiments may be implemented in the form of a recording medium that stores instructions executable by a computer. The instructions may be stored in the form of program codes, and when executed by a processor, the instructions may create a program module to perform operations of the disclosed embodiments. The recording medium may be implemented as a computer-readable recording medium

The computer-readable recording medium may include all kinds of recording media storing instructions that can be interpreted by a computer. For example, the computer-readable recording medium may be read only memory (ROM), random access memory (RAM), a magnetic tape, a magnetic disc, a flash memory, an optical data storage device, etc.

Although embodiments of the disclosure have been described with reference to the accompanying drawings, a person having ordinary skilled in the art will appreciate that other specific modifications may be easily made without departing from the technical spirit or essential features of the disclosure. Accordingly, the foregoing embodiments should be regarded as illustrative rather than limiting in all aspects.

## Claims

1. An image generation apparatus, comprising:
a display;
an input device;
memory storing instructions; and
at least one processor;
wherein the instructions, when executed by the at least one processor, cause the image generation apparatus to:
receive, through the input device, a user input selecting at least one two-dimensional (2D) image and at least one three-dimensional (3D) space type;
provide a 3D image based on the selected at least one 2D image and the selected at least one 3D space type; and
control the display to display the provided 3D image.

2. The image generation apparatus of claim 1, wherein the instructions, when executed by the at least one processor, cause the image generation apparatus to identify distinct layers of a plurality of objects in the provided 3D image, and
wherein the distinct layers have different depth levels.

3. The image generation apparatus of claim 2, wherein the plurality of objects comprise:
a first object on a first layer having a first depth level; and
a second object on a second layer having a second depth level that is higher than the first depth level, and
wherein the instructions, when executed by the at least one processor, cause the image generation apparatus to provide the 3D image by generating an image corresponding to an area where the second object is obscured due to the first object overlapping the second object.

4. The image generation apparatus of claim 3, wherein the processor is configured to blur the second object, and control the display to output the blurred second object.

5. The image generation apparatus of claim 4, wherein the plurality of objects further comprises:
a third object positioned on a third layer having a higher depth level than the second layer, and
the processor is configured to control the display to output the third object to which a higher level of blur effect is applied than to the second object.

6. The image generation apparatus of claim 5, wherein the processor is configured to control the display to sequentially display the plurality of objects according to a depth level of a respective layer where each of the plurality of objects is positioned.

7. The image generation apparatus of claim 3, wherein the plurality of objects further comprises a user interface (UI) object positioned on a fourth layer having a higher depth level than the first layer and a lower depth level than the second layer, and
the processor is configured to blur the second object positioned on the second layer having a higher depth level than the fourth layer, and control the display to output the blurred second object.

8. The image generation apparatus of claim 7, wherein the processor is configured to, in response to receiving a user input associated with moving the UI object to a layer of a lower depth level than the first layer, control the display to output the UI object moving to the layer of the lower depth level than the first layer based on the user input.

9. The image generation apparatus of claim 8, wherein the processor is configured to control the display to output the first object and the UI object to which a collision effect is applied, in response to the UI object reaching the first layer.

10. The image generation apparatus of claim 1, wherein the instructions, when executed by the at least one processor, cause the image generation apparatus to provide the 3D image by positioning the selected at least one 2D image on a 2D development shape corresponding to the selected at least one 3D space type and transforming the 2D image positioned on the 2D development shape into a 3D shape corresponding to the selected at least one 3D space type.

11. An image generation method comprising:
receiving a user input selecting a two-dimensional (2D) image;
receiving a user input selecting a three-dimensional (3D) space type;
providing a 3D image based on the selected 2D image and the selected 3D space type; and
displaying the provided 3D image.

12. The image generation method of claim 11, further comprising identifying distinct layers having different depth levels among a plurality of objects in the provided 3D image,
wherein the plurality of objects comprise:
a first object on a first layer having a first depth level; and
a second object on a second layer having a second depth level that is higher than the first depth level, and
wherein the providing of the 3D image comprises providing an image corresponding to an area where the second object is obscured due to the first object overlapping the second object.

13. The image generation method of claim 12, wherein the outputting of the 3D image comprises blurring the second object, and outputting the blurred second object.

14. The image generation method of claim 13, wherein the plurality of objects further comprises:
a third object positioned on a third layer having a higher depth level than the second layer, and
the outputting of the 3D image comprises outputting the third object to which a higher level of blur effect is applied than to the second object.

15. The image generation method of claim 14, wherein the outputting of the 3D image comprises sequentially displaying the plurality of objects according to a depth level of a respective layer where each of the plurality of objects is positioned.
